Europäisches Patentamt

European Patent Office

Office européen des brevets

(19)

(11) **EP 0 762 153 A2**

(12) **EUROPÄISCHE PATENTANMELDUNG**

(43) Veröffentlichungstag:
    **12.03.1997 Patentblatt 1997/11**

(51) Int. Cl.⁶: **G02B 3/08**, B60R 25/00,
    G08B 13/181, G02B 17/00

(21) Anmeldenummer: 96114042.3

(22) Anmeldetag: **03.09.1996**

(84) Benannte Vertragsstaaten:
    **CH DE FR GB IT LI**

(30) Priorität: **05.09.1995 DE 19532680**

(71) Anmelder: **TEMIC TELEFUNKEN microelectronic
    GmbH
    74072 Heilbronn (DE)**

(72) Erfinder: **Bichlmaier, Günther
    90518 Altdorf (DE)**

(74) Vertreter: **Maute, Hans-Jürgen, Dipl.-Ing.
    TEMIC TELEFUNKEN microelectronic GmbH
    Postfach 35 35
    74025 Heilbronn (DE)**

(54) **Optisches System**

(57) Beschrieben wird ein optisches System mit einer optischen Einheit aus einer Sendeeinheit mit mindestens einem Sendeelement zur Emission von optischer Strahlung, einer Empfangseinheit mit mindestens einem Empfangselement zur Detektion von optischer Strahlung und einer optischen Strecke zur Übertragung der optischen Strahlung zwischen Sendeeinheit und Empfangseinheit.

In der optischen Strecke ist mindestens ein Optikkörper zur Bündelung und Umlenkung der optischen Strahlung angeordnet, wobei der (die) Optikkörper entweder der Sendeeinheit oder der Empfangseinheit zugeordnet ist (sind). Die als Art Fresnellinse ausgebildeten Optikkörper besitzen eine eine unstrukturierte Oberflächenseite und eine Vertiefungen mit steilen Flanken und großen Neigungswinkel bzs. kleinen Prismenwinkel aufweisende strukturierte Oberflächenseite. Die mit Vertiefungen versehene strukturierte Oberflächenseite der Optikkörper bildet eine erste Grenzfläche zur Totalreflexion und eine zweite Grenzfläche zur Brechung der von der Sendeeinheit emittierten optischen Strahlung oder der von der Empfangseinheit zu detektierenden optischen Strahlung und ist entweder der Sendeeinheit oder der Empfangseinheit abgewandt.

FIG.1

EP 0 762 153 A2

# Beschreibung

Die optische Einheit einer Vielzahl von optischen Systemen - beispielsweise (IR-) Fernbedienungssystemen, optischen Signalübertragungssystemen oder optischen Diebstahlsicherungssystemen - besteht aus einer Sendeeinheit mit einem oder mehreren Sendeelementen, einer Empfangseinheit mit einem oder mehreren Empfangselementen und einer optischen Strecke, über die Sendeeinheit und Empfangseinheit miteinander gekoppelt sind. Die von der Sendeeinheit ausgesandte optische Strahlung wird nach Durchlaufen der optischen Strecke von der Empfangseinheit detektiert und dieses Empfangssignal in einer Auswerteeinheit des optischen Systems weiterverarbeitet. Durch eine Änderung der Systemeigenschaften - beispielsweise infolge einer Variation der ausgesandten optischen Strahlung durch Übertragung unterschiedlich codierter Signale oder durch Änderungen in der optischen Strecke - wird das Empfangssignal beeinflußt und dies von der Auswerteeinheit ausgewertet.

Zur Beeinflussung der optischen Eigenschaften der optischen Einheit - beispielsweise zur Erhöhung oder Homogenisierung der Empfindlichkeit der Empfangseinheit - kann in der optischen Strecke ein Optikkörper angeordnet werden. Aus der EP 441 713 ist es bekannt, diesen Optikkörper als torische, asphärische Außenumhüllungslinse auszubilden, die mehrere Empfangselemente (Fotozellen) der Empfangseinheit umgibt. Weiterhin wird in der DE 44 07 911 ein in der optischen Strecke zwischen Sendeeinheit und Empfangseinheit angeordneter katadioptrischer Optikkörper zur Umlenkung und Bündelung der von der Sendeeinheit emittierten Strahlung auf das (einzige) Empfangselement der Empfangseinheit beschrieben.

Es ist die Aufgabe der Erfindung, ein optisches System anzugeben, das vorteilhafte Eigenschaften aufweist - insbesondere einen einfachen und kostengünstigen Aufbau sowie eine günstige Verteilung der optischen Strahlung (großer Ablenkwinkel).

Diese Aufgabe wird erfindungsgemäß durch die Merkmale im Kennzeichen des Patentanspruchs 1 gelöst.

Vorteilhafte Weiterbildungen der Erfindung ergeben sich aus den Unteransprüchen.

Zur Verbesserung der optischen Eigenschaften des optischen Systems ist in der optischen Strecke zwischen Sendeeinheit und Empfangseinheit mindestens ein als Art Fresnellinse („Quasi-Fresnellinse")ausgebildeter Optikkörper mit einer strukturierten Oberflächenseite und einer unstrukturierten Oberflächenseite vorgesehen; der (die) Optikkörper ist (sind) entweder der Sendeeinheit oder der Empfangseinheit zugeordnet, wobei der Optikkörper jeweils in unmittelbarer Nähe der Sendeeinheit bzw. der Empfangseinheit angeordnet und seine unstrukturierte Oberflächenseite der Sendeeinheit bzw. der Empfangseinheit zugewandt ist. Die strukturierte Oberflächenseite der (des) Optikkörper(s) ist als Rillenstruktur ausgebildet, wobei Vertiefungen mit einem bestimmten variablen Neigungswinkel in eine der Oberflächenseite des Optikkörpers eingebracht sind; durch die Vertiefungen werden Linsenbereiche mit einem bestimmten Prismenwinkel definiert, die einerseits an einer ersten Grenzfläche eine Totalreflexion (Spiegelwirkung) und andererseits an einer zweiten Grenzfläche eine Brechung der optischen Strahlung bewirken. Die Vertiefungen (Tiefe, Anordnung) und damit die Neigungswinkel bzw. die hierzu komplementären Prismenwinkel werden so vorgegeben, daß einerseits Totalreflexion der optischen Strahlung auftritt und andererseits die Strahlung den Optikkörper an der brechenden Grenzfläche verlassen kann; eine Variation der Neigungswinkel bzw. Prismenwinkel unter diesen Randbedingungen kann anhand der gewünschten optischen Eigenschaften des Optikkörpers erfolgen, d.h. ob beispielsweise eine Bündelung und/ oder eine Ablenkung der optischen Strahlung erfolgen soll. Die Optikkörper besitzen jeweils eine symmetrische Form, wobei die gewählte Symmetrie (beispielsweise Punktsymmetrie, Achsensymmetrie) von den gewünschten bzw. vorzugebenden optischen Eigenschaften und von der Ausgestaltung der Sendeelemente bzw. Empfangselemente der zugeordneten Sendeeinheit bzw. Empfangseinheit abhängt (bei gleichartigen Sendeeinheiten bzw. Empfangseinheiten wird vorzugsweise die gleiche Formgebung und damit die gleiche Symmetrie des Optikkörpers gewählt). Beispielsweise ist der Optikkörper als Kreisscheibe oder als Quader ausgebildet; die Anordnung der Rillenstruktur auf der strukturierten Oberflächenseite des Optikkörpers kann beispielsweise rotationssymmetrisch in Form konzentrischer Kreise oder in Form paralleler Linien ausgebildet sein. Die Rillenstruktur wird dabei zur Einsparung von Baugröße und Gewicht vorzugsweise so aufgebracht, daß möglichst viele Rillen auf einem möglichst dünnen Optikkörper gebildet werden.

Der (Die) Optikkörper besteht (bestehen) aus einem transparenten Material mit einem von demjenigen der optischen Strecke differierenden Brechungsindex (beispielsweise aus Kunststoff). Der (Die) Optikkörper dient (dienen) zur Umlenkung der Strahlrichtung und/oder zur Bündelung der Strahlung, wobei die strukturierte Oberflächenseite einerseits aufgrund der Totalreflexion als Spiegelfläche zur Realisierung eines großen Ablenkwinkels der optischen Strahlung und andererseits als optisch brechende Fläche zur Ablenkung/Bündelung der von der Sendeeinheit emittierten optischen Strahlung in eine bestimmte Raumrichtung bzw. zur Ablenkung/Bündelung der von der Empfangseinheit zu detektierenden optischen Strahlung aus einer bestimmten Raumrichtung auf die Empfangseinheit wirkt. Die optische Einheit des optischen Systems vereinigt mehrere Vorteile in sich:

-    sie besitzt einen einfachen und damit kostengünstigen Aufbau: es ist eine kompakte Bauweise des Optikkörpers (geringe Dicke) und damit eine sehr geringe Baugröße gegeben, der Optikkörper kann auf einfache Weise (beispielsweise durch Spritzguß) und damit kostengünstig gefertigt werden,

- die optischen Eigenschaften können verbessert werden: die Umlenkung/Bündelung der optischen Strahlung wird auf einfache Weise ohne Reflexionsverluste durch Totalreflexion/Brechung bewerkstelligt, der Ablenkwinkel der optischen Strahlung kann große Werte annehmen, womit auch „Quasi-Fresnellinsen" mit großer Apertur möglich sind, der Streulichtanteil der optischen Strahlung kann durch Anpassung der Prismenwinkel an die Sende- bzw. Empfangscharakteristik am jeweiligen Ort der Linse minimiert werden, durch Variation der Neigungswinkel bzw. Prismenwinkel kann die Hauptempfangsrichtung variiert und die Strahlung aus der Hauptempfangsrichtung gebündelt werden, mit geringem Bauvolumen kann ein bestimmter vorgebbarer (bsp. kegelmantelförmiger) Bereich ausgeleuchtet werden,

- es kann jede beliebige optische Strahlung verwendet werden - insbesondere sichtbares Licht oder IR-Strahlung.

Die Erfindung wird weiterhin anhand eines in der Zeichnung mit den Figuren 1 bis 5 dargestellten Ausführungsbeispiels beschrieben - der optischen Einheit eines als optisches Diebstahlsicherungssystem (Alarmanlage) bei Kraftfahrzeugen eingesetzten und mit IR-Strahlung arbeitenden optischen Systems.
Hierbei zeigt die Figur 1 die Seitenansicht des Kraftfahrzeugs, die Figur 2 in Draufsicht den Überwachungsbereich der Alarmanlage, die Figur 3 die optische Einheit, die Figur 4 eine Detailansicht des Strahlengangs in der optischen Einheit und die Figur 5 den Optikkörper in Draufsicht.

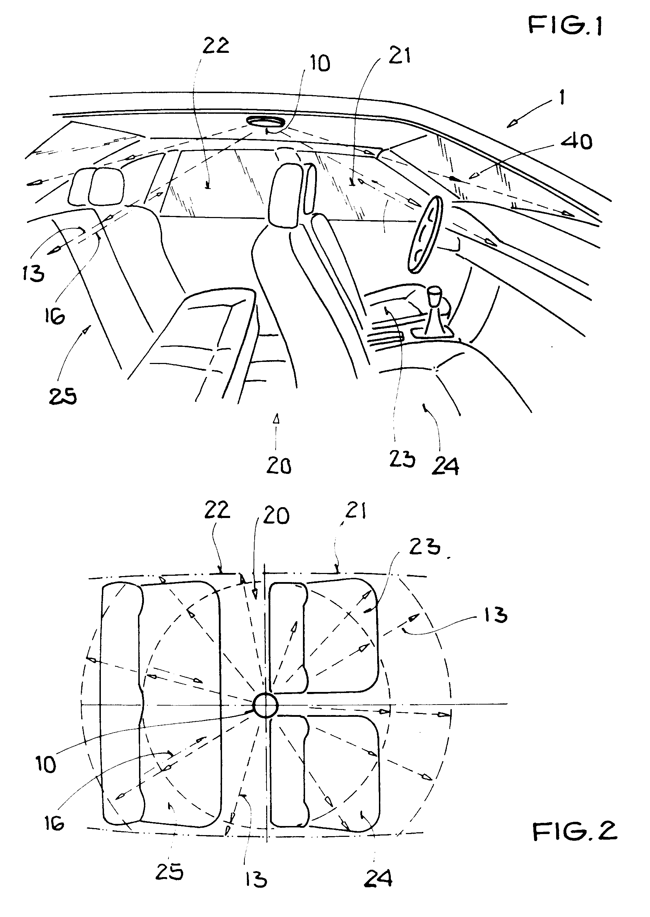

In der Figur 1 ist in einer Seitenansicht der Innenraum 20 des Kraftfahrzeugs 1 mit den Seitenscheiben 21, 22, den Vordersitzen 23, 24 und den Rücksitzen 25 sowie die zentral im Kraftfahrzeug 1 (beispielsweise am Dachhimmel im Bereich der Innenleuchte) angebrachte optische Einheit 10 dargestellt; bsp. ist sowohl der Sendeeinheit der optischen Einheit 10 als auch der Empfangseinheit der optischen Einheit 10 jeweils ein in unmittelbarer Nahe der Sendeeinheit bzw. der Empfangseinheit angeordneter Optikkörper zugeordnet. Der Überwachungsbereich der Alarmanlage wird durch geeignete Ablenkung der von der Sendeeinheit der optischen Einheit 10 emittierten Strahlung 13 bzw. der von der Empfangseinheit der optischen Einheit 10 nach Durchlaufen der optischen Strecke 40 (am Innenraum des Kraftfahrzeugs 1 reflektierten) detektierten Strahlung 16 festgelegt. Die Richtcharakteristik der beispielsweise als IR-Strahlung (von beispielsweise 950 nm Wellenlänge) ausgebildeten optischen Strahlung 13, 16 wird durch entsprechende Ausgestaltung der optischen Einheit 10 vorgegeben.
Die Figur 2 zeigt für den Innenraum 20 des Kraftfahrzeugs 1 den Ausleuchtungsbereich der von der Sendeeinheit der optischen Einheit 10 emittierten Strahlung 13, der in etwa dem durch die optische Einheit 10 definierten Überwachungsbereich der Alarmanlage entspricht (der Innenraum 20 des Kraftfahrzeugs 1 ist dabei in Draufsicht mit den Vordersitzen 23, 24 und den Rücksitzen 25 schematisch dargestellt). Wie anhand des Überwachungsbereichs der Alarmanlage ersichtlich wird, ist ein wirksamer Schutz vor Einbrüchen in den Innenraum 20 des Kraftfahrzeugs 1 durch die Seitenfensterscheiben 21, 22 oder vor Entwendung von Gegenständen aus dem Innenraum 20 des Kraftfahrzeugs 1 durch die Seitenfensterscheiben 21, 22 gegeben.

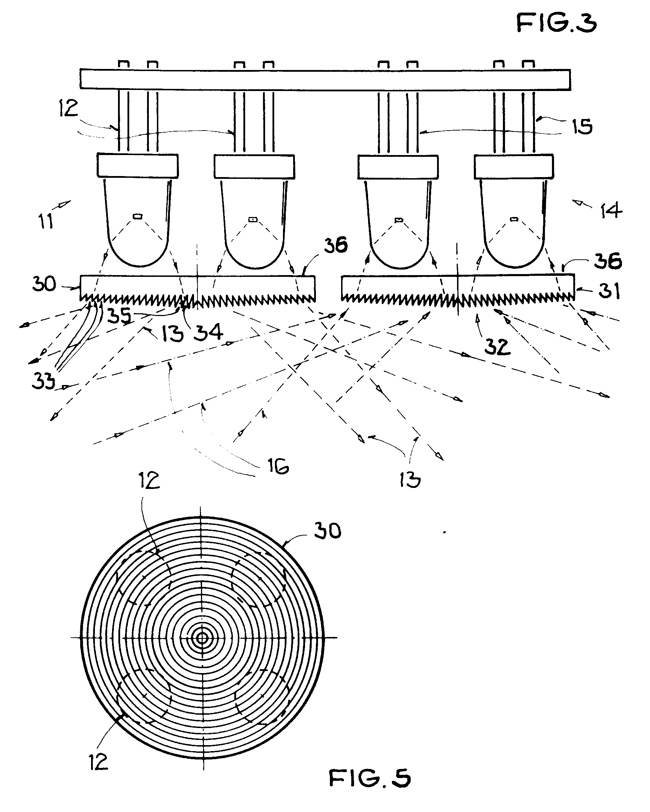

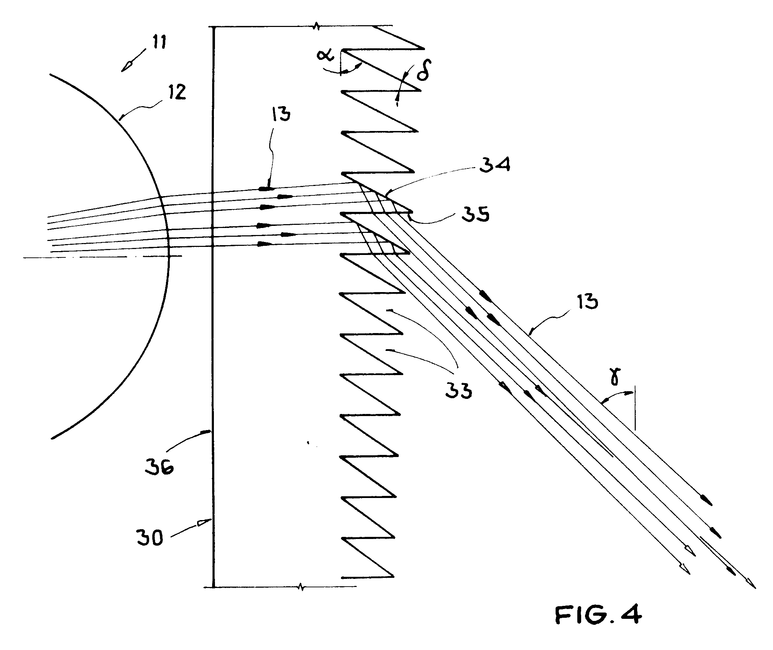

Gemäß der Figur 3 weist die optische Einheit 10 der Alarmanlage eine IR-Sendeeinheit 11 mit den Sendeelementen 12 (IR-Sendedioden) und eine IR-Empfangseinheit 14 mit den Empfangselementen 15 (IR-Empfangsdioden) auf. In der optischen Strecke 40 sind zwei als Quasi-Fresnellinse ausgebildete Optikkörper 30, 31 angeordnet. Die beiden gleichartigen Optikkörper 30, 31 sind als Kreisscheiben ausgebildet, wobei eine Oberflächenseite 36 der Optikkörper 30, 31 unstrukturiert ist und in eine Oberflächenseite 32 der Optikkörper 30, 31 eine Rillenstruktur aus Vertiefungen 33 eingebracht ist; der der Sendeeinheit 11 zugeordnete Optikkörper 30 dient zur Bündelung der von den Sendeelementen 12 emittierten IR-Strahlung 13, der der Empfangseinheit 14 zugeordnete Optikkörper 31 zur Umlenkung bzw. Bündelung der in die Empfangselemente 15 der Empfangseinheit 14 eingekoppelten IR-Strahlung 16. Die Optikkörper 30, 31 bestehen beispielsweise aus Plexiglas und besitzen einen Durchmesser von 20 mm sowie eine Dicke von 2 mm. In die der Sendeeinheit 11 bzw. der Empfangseinheit 14 abgewandte Oberflächenseite 32 der Optikkörper 30, 31 sind kerbenförmige Vertiefungen 33 der Tiefe 0,4 mm bis 1,1 mm und der Breite 0,5 mm eingebracht.
Wie aus der Detailansicht der Sendeeinheit 11 der optischen Einheit 10 in der Figur 4 hervorgeht (für die Empfangseinheit 14 der optischen Einheit 10 gilt Analoges), werden durch die Vertiefungen 33 Totalreflexion und Brechung bewirkende prismatische Teilbereiche mit einem Neigungswinkel $\alpha$ von 40° bis 65° bzw. mit einem zum Neigungswinkel (x komplementären Prismenwinkel $\delta$ ($\alpha + \delta = 90°$) von 25° bis 50° gebildet. Hierdurch wird die optische Strahlung 13, 16 der Sendeelemente 12 der Sendeeinheit 11 bzw. der Empfangselemente 15 der Empfangseinheit 14 an der ersten Grenzfläche 34 totalreflektiert und an der zweiten Grenzfläche 35 in eine bestimmte Richtung unter dem Ablenkwinkel $\gamma$ (bsp. $\gamma = 45°$) gebrochen; durch die Wahl der Vertiefungen 33 und damit der Neigungswinkel $\alpha$ bzw. der Prismenwinkel $\delta$ ist sichergestellt, daß einerseits an der ersten Grenzfläche 34 Totalreflexion auftritt und daß andererseits die an der zweiten Grenzfläche 35 gebrochene Strahlung den Optikkörper 30, 31 (unter einem großen Ablenkwinkel $\gamma$) verlassen kann.
Gemäß der Figur 5 weist die Sendeeinheit 11 beispielsweise vier IR-Sendedioden 12 auf, von denen jeweils eine Sendediode 12 einem Viertelskreissektor des mit einer Vertiefungen 33 in Form konzentrischer Kreise aufweisenden Rillenstruktur versehenen Optikkörpers 30 zugeordnet ist; die äquidistant verteilten Sendeedioden 12 der Sendeeinheit 11 sind dabei in einem Abstand von beispielsweise 0,5 mm vom Optikkörper 30 entfernt angeordnet. Die in der Figur 4 nicht dargestellte Empfangseinheit 14 besitzt beispielsweise den gleichen Aufbau wie die Sendeeinheit 11, d.h. es sind vier IR-Empfangsdioden 15 im Abstand von 0,5 mm vom Optikkörper 31 entfernt äquidistant verteilt angeordnet.

**Patentansprüche**

1. Optisches System mit einer optischen Einheit (10) aus:

    a) einer Sendeeinheit (11) mit mindestens einem Sendeelement (12) zur Emission von optischer Strahlung (13),

    b) einer Empfangseinheit (14) mit mindestens einem Empfangselement (15) zur Detektion von optischer Strahlung (16),

    c) einer optischen Strecke (40) zur Übertragung der optischen Strahlung (13, 16) zwischen Sendeeinheit (11) und Empfangseinheit (14),

    dadurch gekennzeichnet:

    d) in der optischen Strecke (40) ist mindestens ein Optikkörper (30, 31) zur Bündelung und Umlenkung der optischen Strahlung (13, 16) angeordnet, wobei der (die) Optikkörper (30, 31) entweder der Sendeeinheit (11) oder der Empfangseinheit (14) zugeordnet ist (sind),

    e) die als Art Fresnellinse ausgebildeten Optikkörper (30, 31) besitzen eine unstrukturierte Oberflächenseite (35) und eine Vertiefungen (33) mit steilen Flanken und großen Neigungswinkel ($\alpha$) bei kleinen Prismenwinkel ($\delta$) aufweisende strukturierte Oberflächenseite (32),

    f) die mit Vertiefungen (33) versehene strukturierte Oberflächenseite (32) der Optikkörper (30, 31) bildet eine erste Grenzfläche (34) zur Totalreflexion und eine zweite Grenzfläche (35) zur Brechung der von der Sendeeinheit (11) emittierten optischen Strahlung (13) oder der von der Empfangseinheit (14) zu detektierenden optischen Strahlung (16) und ist entweder der Sendeeinheit (11) oder der Empfangseinheit (14) abgewandt.

2. Optisches System nach Anspruch 1, dadurch gekennzeichnet, daß die Optikkörper (30, 31) als Kreisscheiben ausgebildet sind.

3. Optisches System nach Anspruch 1 oder 2, dadurch gekennzeichnet, daß auf der strukturierten Oberflächenseite (32) der Optikkörper (30, 31) die Vertiefungen (33) in Form konzentrischer Kreise angeordnet sind.

4. Optisches System nach einem der Ansprüche 1 bis 3, dadurch gekennzeichnet, daß die auf der strukturierten Oberflächenseite (32) der Optikkörper (30, 31) angeordneten Vertiefungen (33) kerbenförmig mit vom Rand zur Mitte des Optikkörpers (30, 31) zunehmenden Neigungswinkel ($\alpha$) der Flanken der Vertiefungen (33) bzw. abnehmenden Prismenwinkel ($\delta$) ausgebildet sind.

5. Optisches System nach Anspruch 4, dadurch gekennzeichnet, daß der Neigungswinkel ($\alpha$) der Flanken der Vertiefungen (33) im Bereich von 40° bis 65° liegt.

FIG.1

FIG.2

FIG.3

FIG.5

FIG. 4